# FASCICULE DE BREVET EUROPEEN

(11) **EP 0 395 466 B1**
(45) Date de publication et mention de la délivrance du brevet: **08.09.1993**
(21) Numéro de dépôt: 90400961.0
(22) Date de dépôt: 10.04.1990
(51) Int. Cl.: B29C 63/04, E04C 2/26, E04D 3/35

(54) **Procédé d'obtention en continu de panneaux revêtus sur au moins deux faces adjacentes**
Verfahren zur kontinuierlichen Herstellung von auf mindestens zwei benachbarten Seiten beschichteten Paneelen
Process for continuous manufacture of panels coated on at least two adjacent sides

(30) Priorité: 27.04.1989 FR 8905581
(43) Date de publication de la demande: 31.10.1990
(73) Titulaire: ISOVER SAINT-GOBAIN, F-92400 Courbevoie (FR)
(72) Inventeur: Rias, Jean-Claude, F-78670 Villènes Sur Seine (FR)
(74) Mandataire: Menes, Catherine

(56) Documents cités:
- BE-A- 677 807
- DE-A- 2 814 471
- DE-B- 1 250 767
- FR-A- 1 420 142
- FR-A- 2 150 611

## Description

L'invention concerne un procédé d'obtention en continu de panneaux revêtus sur au moins deux faces adjacentes rebordés, notamment de panneaux rigides ou semi-rigides en laine minérale dont une face est pourvue d'un revêtement rebordé sur un ou deux des côtés adjacents, utilisés par exemple comme plafonds, et sont alors posés entre pannes ou sur une ossature suspendue - ou utilisés pour des bardages - posés entre profilés verticaux.

Pour l'isolation acoustique et thermique de bâtiments commerciaux, tertiaires et industriels, il est connu d'utiliser des panneaux relativement rigides, en laine de verre ou laine de roche, revêtus d'un pare-vapeur qui est associé éventuellement à un parement d'aspect. Un exemple type est un panneau rigide en laine de verre revêtu d'un pare-vapeur en papier kraft aluminisé et laqué, le pare-vapeur étant collé sur une couche de renforcement du panneau du type voile de fibres de verre.

Pour améliorer la tenue mécanique de tels panneaux - et par ailleurs leur aspect esthétique, on peut les reborder sur un ou deux côtés, le rebordage consistant à rabattre le revêtement le long d'une arête et à coller la partie débordante à l'arrière du panneau. Le rebordage facilite en outre la manipulation des panneaux, car il évite le contact des mains avec la laine minérale au toucher souvent ressenti comme désagréable. Enfin - et dans la mesure où le revêtement lui-même supporte un tel traitement - le rebordage permet le lessivage des panneaux, l'eau n'étant plus en mesure de pénétrer par les côtés dans l'épaisseur de la couche en laine de verre.

Si les avantages que procure le rebordage sont multiples et apparaissent d'emblée, il n'en est pas de même de son exécution. En effet, les panneaux auxquels s'intéresse la présente invention sont des produits peu onéreux, essentiellement utilisés pour des plafonds couvrant une grande surface et donc pour lesquels "le plus" conféré par le rebordage ne peut être compensé par une trop forte augmentation du prix de revient.

Cette exigence de base d'un procédé économique ne peut pas être satisfaisante lorsque le revêtement des panneaux en laine minérale se fait "en reprise" comme il est usuel pour ce type d'opérations, c'est-à-dire sur des panneaux déjà découpés aux dimensions définitives. Un travail en reprise a en effet pour inconvénient majeur de doubler le nombre de manipulations des panneaux, ce qui implique des moyens de manutention supplémentaires, tant en outillage qu'en personnel. De plus, il est très difficile d'obtenir une tension du revêtement dont le niveau soit suffisant pour éviter la formation de plis inesthétiques, mais qui soit toutefois assez faible pour ne pas risquer de le déchirer.

Par ailleurs, opérer le revêtement directement sur la ligne de production pose un certain nombre de difficultés. En premier lieu, la largeur de la bande en laine minérale qui sort de l'étuve de polymérisation correspond en règle générale à la largeur de plusieurs panneaux d'où la nécessité de disposer d'un convoyeur élargi permettant d'écarter les panneaux pour reborder les côtés dans la partie centrale de la bande en laine minérale. Une autre difficulté - bien plus délicate que la première - vient de ce qu'il faut tirer sur le revêtement pour le tendre, en évitant par contre de tirer sur les fibres de la couche en laine minérale. On peut certes éviter dans une large mesure la dégradation de la couche en laine minérale en utilisant des fibres longues et un liant plus performant, mais il va de soi que cela entraîne un rencherissement important du procédé.

Il est connu de BE-A-677 807 un procédé d'obtention de panneaux revêtus consistant à appliquer à l'aide d'un rouleau sur leur face supérieure des feuilles de matière thermoplastique, feuilles que l'on ramollit par chauffage afin de pouvoir les rabattre par des rouleaux de guidage sur les flancs des panneaux puis que l'on colle par interposition d'un adhésif.

De même, il est connu de DE-A-2 814 471 un procédé de revêtement de panneaux où l'on colle le revêtement à la face supérieure desdits panneaux à l'aide d'une colle à prise rapide puis où l'on rabat et colle le revêtement sur les flancs des panneaux par traction à l'aide de brosses rotatives latérales.

La présente invention a pour but un procédé d'obtention en continu de panneaux revêtus sur au moins deux faces adjacentes à partir d'une bande continue, ou du moins d'une très grande longueur comparée à la longueur des panneaux, lesdits panneaux étant notamment des panneaux en laine minérale dont une première face est munie d'un revêtement rebordé sur au moins un des côtés adjacents à cette première face.

Le procédé selon l'invention se caractérise par le fait que la vitesse de défilement de la bande en laine minérale devant l'organe d'application et de collage du revêtement est constante pendant toutes les opérations qui se suivent et qui sont :
- le collage du revêtement selon une première face de la bande continue notamment de la bande en laine minérale,
- le maintien en position du revêtement jusqu'au collage définitif sur cette première face,
- le rabattement progressif du revêtement selon le ou les côtés de la bande adjacents à la première face,- le collage des rabats,
- le maintien en position du revêtement jusqu'au collage définitif.

Un point particulièrement important du procédé selon l'invention est la vitesse de défilement constante d'un bout à l'autre des opérations, de sorte qu'il ne se produit pas d'à-coups dont on sait qu'ils favorisent la déformation et la déchirure du revêtement. Par ailleurs, on évite l'arrachage des fibres minérales car la vitesse à laquelle la bande en laine minérale entre dans la zone de revêtement est égale à sa vitesse de sortie. Pour assurer une telle vitesse constante de défilement, on opère de préférence après chaque collage une légère traction sur la bande continue de façon à compenser la perte de vitesse consécutive aux frottements avec les organes de conformation et de collage. Un cas particulièrement avantageux de mise en oeuvre de cette caractéristique est réalisé lorsque la vitesse de défilement de la bande est donnée par la vitesse de la ligne. Dans ce cas, la bande n'est plus seulement tirée, mais de plus poussée par sa partie qui suit et qui est par exemple produite de façon continue sans interruption, comme c'est le cas dans une installation de production de laine minérale.

L'autre caractéristique majeure du procédé selon l'invention - mais qui ne doit être entendue qu'en association à la première - est le fait que l'opération de rebordage ne débute qu'après le collage définitif sur la face principale. Par collage définitif, on entend au sens de l'invention un état de prise de la colle tel que la suppression de l'organe d'application n'entraîne pas de relâchement, ce qui signifie un état avancé de gélification.

Cette caractéristique implique une dissociation dans le temps de la phase de collage de la face principale et de la phase de collage des bords. Pour ce dernier, on peut appliquer une nouvelle couche de colle ou mieux utiliser pour l'ensemble du revêtement une colle plusieurs fois réactible à la chaleur - et en tout cas l'étant au moins deux fois. Le revêtement peut ainsi comporter une couche de collage formée par une couche de polyéthylène qui conserve son adhésivité même si elle est chauffée puis refroidie un grand nombre de fois. La couche de colle peut également être constituée par une couche thermocollante du type "hot melt".

Pour un meilleur état de surface des bords, il est alors avantageux de procéder entièrement au pliage des rabats et de ne débuter le réchauffage de la colle qu'une fois les rabats déjà placés en position définitive.

Pour accélérer le procédé dans le cas d'utilisation d'une colle multi-thermoréactivable, il est avantageux que les organes utilisés pour maintenir le revêtement en position soient refroidis de façon à ce que la couche de polyéthylène soit rapidement ramenée à une température inférieure à sa température de ramollissement. Faute d'un tel refroidissement et compte tenu des vitesses élevées d'une ligne de production de laine minérale, la zone de revêtement peut atteindre une longueur de par exemple 10 mètres ce qui peut être incompatible avec les dimensions du bâtiment abritant la ligne de production.

Les produits obtenus avec le procédé selon l'invention ne présentent aucun pli. Il va de soi que leur esthétique est encore supérieure lorsque la face principale est lissée avec application d'un voile en fibres de verre, ce lissage étant de préférence réalisé dans l'étuve de polymérisation du liant, conformément aux enseignements de la demande de brevet français FR-A-2 640 546 au nom de la demanderesse.

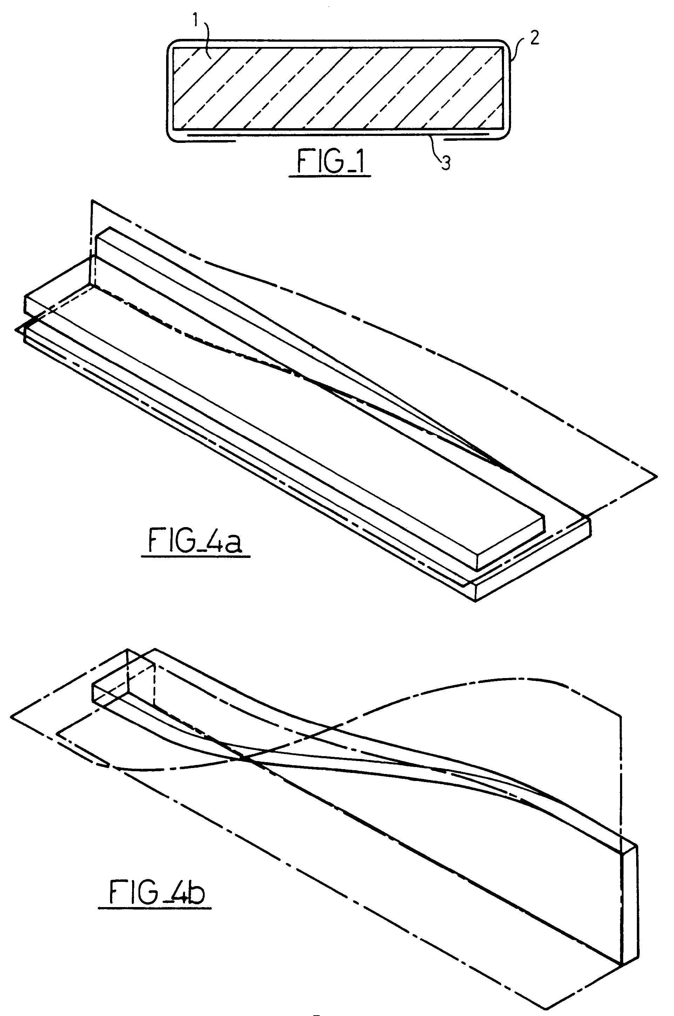

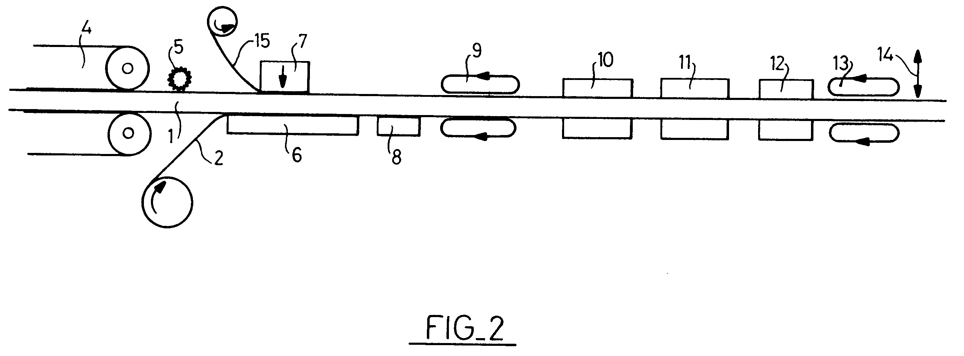

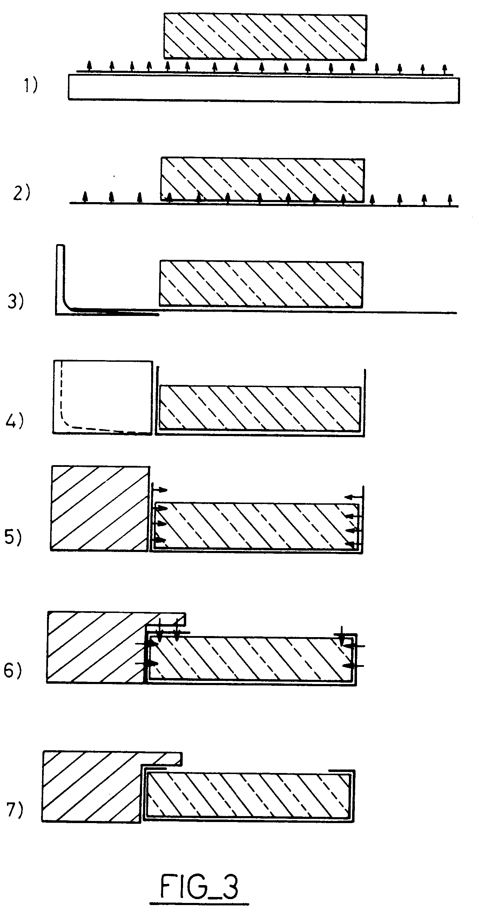

D'autres détails et caractéristiques avantageuses de l'invention sont décrites ci-après en référence aux dessins annexés qui représentent :
. **figure 1** : un panneau isolant rebordé vue en coupe,
. **Figure 2** : un schéma de principe d'une ligne de production pour la mise en oeuvre du procédé selon l'invention,
. **figure 3** : des schémas illustrant les étapes principales du procédé selon l'invention,
. **figure 4** : des vues en perspective des organes conformateurs A et B visibles à la figure 2. .

A la figure 1, est schématisé un panneau isolant vu en coupe. Pour l'essentiel, il est constitué d'une couche 1 de laine minérale en fibres minérales, notamment en fibres de verre dites d'isolation, contenant un liant polymérisé. La densité de la couche 1 est par exemple comprise entre 15 et 80 kg/m³, pour une épaisseur comprise entre 10 et 100 mm ce qui globalement correspond à une gamme commerciale de produits classés rigides ou semi-rigides.

Sur trois de ses faces, et pour une petite part de la quatrième, le panneau est muni d'un revêtement 2. Ce revêtement a plusieurs fonctions : une fonction bien évidemment esthétique (il couvre la face principale, c'est-à-dire la seule face visible après le montage), une fonction d'étanchéité à la vapeur d'eau (fondamentale pour la préservation de la toiture qui ne doit pas être pourrie par la vapeur d'eau condensant à l'arrière du panneau) et éventuellement à l'eau liquide (si on souhaite pouvoir occasionnellement lessiver les panneaux) et enfin une fonction de simplification de la mise en oeuvre dans la mesure où de tels panneaux peuvent être manipulés à mains nues sans la moindre gêne. Tout en contribuant à ces diverses fonctions, le rebordage favorise également la rigidité du panneau et donc sa tenue mécanique.

La face principale du panneau comporte également, intercalé entre la couche de laine minérale et le revêtement, un voile de fibres de verre destiné à uniformiser la surface de la couche de laine minérale 1 en la lissant et rigidifiant de plus celle-ci lui conférant ainsi des propriétés mécaniques améliorées. De plus, un voile en fibres de verre - dont le grammage est par exemple compris entre 35 et 150 g/m² - a une porosité inférieure à celle de la laine minérale, ce qui est favorable du point de vue de la tenue au collage du revêtement.

Ce revêtement 2 est par exemple constitué, en allant de l'intérieur vers l'extérieur - d'une couche de polyéthylène - dont le grammage est par exemple de l'ordre de 40 g/m², d'une feuille de papier kraft et/ou une feuille d'aluminium, la face en aluminium étant éventuellement couverte d'une couche de laque. Un autre exemple de revêtement utilisé est un système - couche de polyéthylène ou de "hot melt" - voile de verre peint, une feuille d'aluminium étant éventuellement insérée entre la couche de colle et le voile. De fait, tous les systèmes feuilles de polyéthylène - parement extérieur conviennent à la condition toutefois que le parement supporte la température nécessaire à l'activation du pouvoir thermocollant du polyéthylène et qu'il soit en mesure de remplir les fonctions attendues notamment du type étanchéité à la vapeur d'eau listées plus haut. A ce revêtement principal 2 peut éventuellement s'ajouter un revêtement dorsal 3 par exemple en papier kraft et/ou en aluminium de sorte que la laine minérale n'est plus apparente que sur deux petits côtés du panneau.

Les étapes du procédé de revêtement selon l'invention vont maintenant être décrites en référence aux figures 2 et 3.

Au sortir de l'étuve de conformation 4 et dans laquelle on procède éventuellement au lissage du panneau, la bande continue en laine minérale est découpée en bandes de la largeur des panneaux par exemple au moyen de scies rotatives 5. Après cette découpe, les bandes sont écartées de façon à disposer entre deux bandes d'un espace suffisant pour le revêtement, soit au minimum de deux fois la hauteur totale des rabats. Toutes les bandes sont traitées à l'identique et de façon simultanée, aussi ne sera-t-il donc plus fait référence par la suite qu'au traitement d'une seule d'entre elles. Le revêtement 2 est amené sous la bande en laine minérale 1 (schéma 1). Il va de soi que celle-ci repose sur un convoyeur ici non schématisé. Le revêtement est par exemple échauffé au moyen d'une table chauffante, de préférence couverte d'un revêtement anti-adhésif du type "téflon" ou de tout autre moyen équivalent permettant d'activer la colle. Pour assurer un bon collage - surtout pour les produits les plus légers - on assure une pression au moyen d'un organe de pressage 7 agissant sur la face du dessus de la bande 1. Au moment de cette opération (schéma 2), la vitesse de défilement de la bande est maintenue identique à la vitesse de la ligne de production qui alimente de façon la ligne de revêtement dont elle fait partie intégrante.

Dès que le revêtement est correctement appliqué (schéma 3), la bande 1 en laine minérale entre dans une première zone de refroidissement 8. Ce refroidissement peut durer par exemple 1 seconde, ce qui correspond pour une vitesse de ligne de l'ordre de 10 mètres par minute à une zone d'environ 60 cm de long. Ce refroidissement a pour but de ramener la température de la couche de polyéthylène du revêtement à une valeur inférieure à la température de ramollissement. A la fin de ce premier collage, on opère de préférence une légère traction sur la bande en laine minérale de façon à assurer une vitesse égale à la vitesse initiale à l'entrée de la zone de revêtement, ceci malgré les frottements dus au pressage. Pour cela on utilise par exemple des tapis de traction 9.

La seconde opération peut alors commencer : le collage sur les côtés. Pour cela on utilise un conformateur froid 10 qui permet de procéder au pliage de façon parfaitement contrôlée et qui relève progressivement les rabats jusqu'à les plaquer contre la tranche de la laine minérale (schéma 4). Le conformateur 10 est schématisé à la figure 4a. Il est important de noter que sa surface est lisse et continue afin d'éviter toute déformation inesthétique du revêtement. On voit qu'il est constitué en fait par une lame progressivement relevée à 90°.

On peut alors réactiver la colle, mais cette fois-ci sans réchauffer la face principale de façon à éviter tout glissement. Cette réactivation est obtenue au moyen du conformateur chaud 11 qui comme schématisé à la figure 4-b est sous la forme d'un patin chauffant (schéma 5) dont l'extrémité avale est en forme d'équerre afin de réaliser le second pliage pour un rebordage complet (schéma 6). Le conformateur chaud est de préférence téflonné ou muni d'un revêtement anti-adhérant équivalent, ceci afin d'éviter que la laque souvent utilisée pour le revêtement ne vienne souiller le conformateur. Il est important de noter que la surface du conformateur est parfaitement continue de façon à éviter tout à-coup.

L'ensemble passe ensuite à nouveau dans une zone de refroidissement 12 afin de figer définitivement le revêtement maintenant collé sur tout ou partie des 4 faces de la bande 1.

Comme à la fin de la première opération de collage, on opère une traction par un tapis 13 de façon à maintenir constante la vitesse de la bande.

Il doit être noté qu'il n'est pas utile de procéder au collage définitif des côtés avant de procéder au collage sur la face de dessus, car le revêtement est alors parfaitement tenu par son collage sur la face du dessous de la bande 1 de sorte qu'il n'y a plus aucun risque de glissement.

On procède enfin à la découpe en longueur des panneaux par exemple au moyen d'un massicot 14.

Eventuellement la face dorsale du panneau est également munie d'un revêtement 15 par exemple en aluminium muni d'une couche thermoréactivée et appliquée directement par l'organe presseur 7 comme schématisé à la figure 2.

Les panneaux revêtus rebordés selon l'invention conviennent particulièrement bien à la réalisation de plafonds à ossatures visibles suspendues, comme on en trouve couramment dans les bâtiments industriels et en raison de leur esthétique très soignée peuvent également être utilisés pour des bureaux ou des locaux commerciaux.

## Revendications

1. Procédé d'obtention en continu de panneaux revêtus sur au moins deux faces adjacentes à partir d'une bande continue à base de laine minérale (1), au moyen d'organes d'application et de collage (7, 10, 11) devant lesquels la bande défile, ledit procédé comportant les opérations successives suivantes, toutes effectuées avec la même vitesse de défilement de la bande :
- le collage du revêtement (2) continu et muni d'une couche de colle au moins deux fois réactivable à la chaleur selon une première face de la bande (1),
- le maintien en position du revêtement (2) jusqu'au collage définitif dudit revêtement selon cette première face,
- le rabattement progressif du revêtement (2) selon le ou les côtés de la bande (1),
- le collage des rabats,
- le maintien en position du revêtement (2) jusqu'au collage définitif dudit revêtement sur ces rabats.

2. Procédé selon la revendication 1, caractérisé en ce que la couche de colle du revêtement (2) est une couche de polyéthylène.

3. Procédé selon la revendication 1 ou 2, caractérisé en ce que les maintiens en position s'effectuent au moyen d'organes refroidis (8, 12).

4. Procédé selon l'une des revendications 1 à 3, caractérisé en ce que la réactivation de la colle pour le collage des rabats débute après que le revêtement (2) a été plié et plaqué sur les côtés de la bande (1).

5. Procédé selon l'une des revendications 1 à 4, caractérisé en ce que la face principale de la bande (1) est lissée avant d'être revêtue.

6. Procédé selon l'une des revendications 1 à 5, caractérisé en ce que la vitesse de défilement de la bande (1) est égale à la vitesse de la ligne de production de la bande en laine minérale, ladite bande en laine minérale étant sans fin.

7. Procédé selon l'une des revendications 1 à 6, caractérisé en ce que l'on opère une traction sur la bande (1) après chaque opération de collage.

8. Procédé selon l'une des revendications 1 à 7, caractérisé en ce que les rabats sont rabattus sur la face parallèle à la face principale de la bande (1) lors du collage des rabats.

9. Procédé selon l'une des revendications précédentes, caractérisé en ce qu'un second revêtement (3) est collé sur la face dorsale de la bande (1).

10. Application du procédé selon l'une des revendications 1 à 9 à l'obtention de panneaux isolants en laine minérale rebordés sur au moins un côté comportant un revêtement constitué d'un sandwich papier kraft - couche de polyéthylène - aluminium éventuellement laqué.

11. Application du procédé selon l'une des revendications 1 à 9 à l'obtention de panneaux isolants rebordés sur au moins un côté comportant un revêtement constitué par un tissu de verre peint et une couche de polyéthylène.

## Claims

1. Method of continuously producing panels lined on at least two adjacent surfaces from a continuous mineral wool-based strip (1) by means of applying and gluing members (7, 10, 11) in front of which the strip passes, the method comprising the following succession of operations all carried out at the same velocity of travel of the strip:
- gluing of the lining (2) which is continuous and provided with a layer of adhesive which can be reactivated at least twice in heat along a first surface of the strip (1);
- holding the lining (2) in position until the said lining is glued definitively along this first surface;
- progressive turning over of the lining (2) along the edge or edges of the strip (1);
- gluing of the turned-over edges;
- maintenance of the lining (2) in position until the said lining is glued definitively to these turned-over edges.

2. Method according to Claim 1,
characterised in that the layer of glue for the lining (2) is a layer of polyethylene.

3. Method according to Claim 1 or 2, characterised in that the linings are held in position by means of cooled members (8, 12).

4. Method according to any one of Claims 1 to 3, characterised in that reactivation of the glue for gluing the turned-over edges starts after the lining (2) has been folded and applied against the edges of the strip (1).

5. Method according to any one of Claims 1 to 4, characterised in that the principal surface of the strip (1) is smoothed before being lined.

6. Method according to any one of Claims 1 to 5, characterised in that the travel velocity of the strip (1) is equal to the velocity of the line producing the mineral wool strip, the said mineral wool strip being endless.

7. Method according to any one of Claims 1 to 6, characterised in that traction is applied to the strip (1) after each gluing operation.

8. Method according to any one of Claims 1 to 7, characterised in that the turned-over edges are turned over onto the surface parallel with the main surface of the strip (1) when the turned-over edges are glued.

9. Method according to any one of the preceding claims, characterised in that a second lining (3) is glued onto the dorsal face of the strip (1).

10. Application of the method according to any one of Claims 1 to 9 to the production of insulating mineral wool panels edged on at least one side and comprising a lining consisting of a kraft paper - polyethylene layer optionally lacquered aluminium sandwich.

11. Application of the method according to any one of Claims 1 to 9 to the production of insulating panels edged on at least one side and comprising a lining consisting of a painted woven glass cloth and a layer of polyethylene.

## Patentansprüche

1. Verfahren zur kontinuierlichen Herstellung von auf mindestens zwei aneinandergrenzenden Flächen kaschierten Platten aus einer endlos vorliegenden Bahn auf Basis von Mineralwolle (1) unter Verwendung von Aufbringungs- und Klebeeinrichtungen (7,10,11), and denen die Bahn vorbeiläuft, wobei das Verfahren die folgenden aufeinanderfolgenden Arbeitsschritte aufweist, welche alle mit gleicher Laufgeschwindigkeit der Bahn ausgeführt werden:
- Kleben der endlosen Kaschierungsbahn (2), welche mit einer mindestens zweimal in Wärme reaktivierbaren Kleberschicht versehen ist, entlang einer ersten Fläche den Bahn (1),
- Lagesichern der Kaschierungsbahn (2) an ihrem Platz bis zu ihrem endgültigen Verkleben entlang dieser ersten Fläche,
- fortlaufendes Umschlagen der Kaschierungsbahn (2) entlang der Seite oder der Seiten der Bahn (1),
- Kleben der umgeschlagenen Partien,
- Lagesichern des Kaschierungsbahn (2) an ihrem Platz bis zu ihrem endgültigen Verkleben an diesen umgeschlagenen Partien.

2. Verfahren nach Anspruch 1, dadurch gekennzeichnet, daß die Klebeschicht der Kaschierungsbahn (2) eine Polyethylenschicht ist.

3. Verfahren nach Anspruch 1 oder 2, dadurch gekennzeichnet, daß die Lagesicherungsvorgänge unter Verwendung von gekühlten Organen (8,12) durchgeführt werden.

4. Verfahren nach einem der Ansprüche 1 bis 3, dadurch gekennzeichnet, daß die Reaktivierung des Klebers zum Kleben der umgeschlagenen Partien beginnt, nachdem die Kaschierungsbahn (2) umgeschlagen und auf die Seiten der Bahn (1) aufgelegt wurde.

5. Verfahren nach einem der Ansprüche 1 bis 4, dadurch gekennzeichnet, daß die Hauptfläche der Bahn (1) vor dem Kaschieren geglättet wird.

6. Verfahren nach einem der Ansprüche 1 bis 5, dadurch gekennzeichnet, daß die Laufgeschwindigkeit der Bahn (1) gleich ist der Geschwindigkeit des Produktionsbandes für die Herstellung der Mineralwollebahn, wobei die Mineralwollebahn endlos ist.

7. Verfahren nach einem der Ansprüche 1 bis 6, dadurch gekennzeichnet, daß nach jedem Klebevorgang auf die Bahn (1) Zug ausgeübt wird.

8. Verfahren nach einem der Ansprüche 1 bis 7, dadurch gekennzeichnet, daß die umgeschlagenen Partien nach ihrem Verkleben auf die parallel zur Hauptfläche der Bahn (1) liegende Fläche umgeschlagen werden.

9. Verfahren nach einem der vorhergehenden Ansprüche, dadurch gekennzeichnet, daß eine zweite Kaschierungsbahn auf die Rückfläche der Bahn (1) geklebt wird.

10. Anwendung des Verfahrens nach einem der Ansprüche 1 bis 9 zur Herstellung von auf mindestens einer Seite randseitig eingefaßten Dämmplatten aus Mineralwolle, welche mit einer Schichtung aus Kraftpapier - Polyethylenschicht - eventuell lackiertem Aluminium kaschiert sind.

11. Anwendung des Verfahrens nach einem der Ansprüche 1 bis 9 zur Herstellung von auf mindestens einer Seite randseitig verstärkten Dämmplatten, welche mit einem Gewebe aus mit einem Anstrich versehenen Glas und einer Polyethylenschicht kaschiert sind.
